# EUROPEAN PATENT SPECIFICATION

(11) **EP 2 338 639 B1**
(45) Date of publication and mention of the grant of the patent: **20.06.2012**
(21) Application number: 10188491.4
(22) Date of filing: 22.10.2010
(51) Int. Cl.: B23Q 11/00, B23Q 17/22

(54) **Column machine tool**
Säulenwerkzeugmaschine
Machine-outil de type à colonne

(30) Priority: 22.12.2009 IT BS20090234
(43) Date of publication of application: 29.06.2011
(73) Proprietor: INNSE-BERARDI S.p.A., 25127 Brescia (IT)
(72) Inventor: Goffrini, Roberto, 25124 Brescia (IT); Leoni, Sergio, 25129 Brescia (IT)
(74) Representative: Pulieri, Gianluca Antonio

(56) References cited:
- EP-A1- 0 054 836
- EP-A1- 0 812 651
- WO-A1-2009/098931
- DE-A1- 2 461 948
- DE-A1- 2 904 974
- US-A- 3 523 484
- US-A- 3 800 636
- US-B1- 6 325 578

## Description

The present invention relates to a column machine tool, such as a drilling or milling-boring machine.

Column machine tools are often used to process large sized workpieces and the vertical upright, which the carriage slides on, is obviously of a significant height, generally higher than the workpiece to be processed.

During processing, mechanical effects develop between the machine tool and the piece to be worked, having different causes: for example, the piece develops a resistance to the feed movement of the tool or the mandrel of the machine is pushed against the piece to be processed to ensure that the oil recirculation system is closed.

Such actions are released onto the upright of the machine causing it to flex, in a more accentuated manner the higher the carriage is positioned on the upright to perform processing.

Such flexion negatively influences processing tolerances. Examples of prior art column machine tool are shown in documents DE2461948A1 and US6325578B1.

The purpose of the present invention is to make a column machine tool able to limit the flexing of the upright.

Such purpose is achieved by a machine tool made according to claim 1.

The characteristics and advantages of the machine tool according to the invention will be evident from the following description, made by way of a non-limiting example, with reference to the attached drawings wherein:

- figures 1 and 2 show the prior art;

- figures 3 to 10 show embodiments of the present invention.

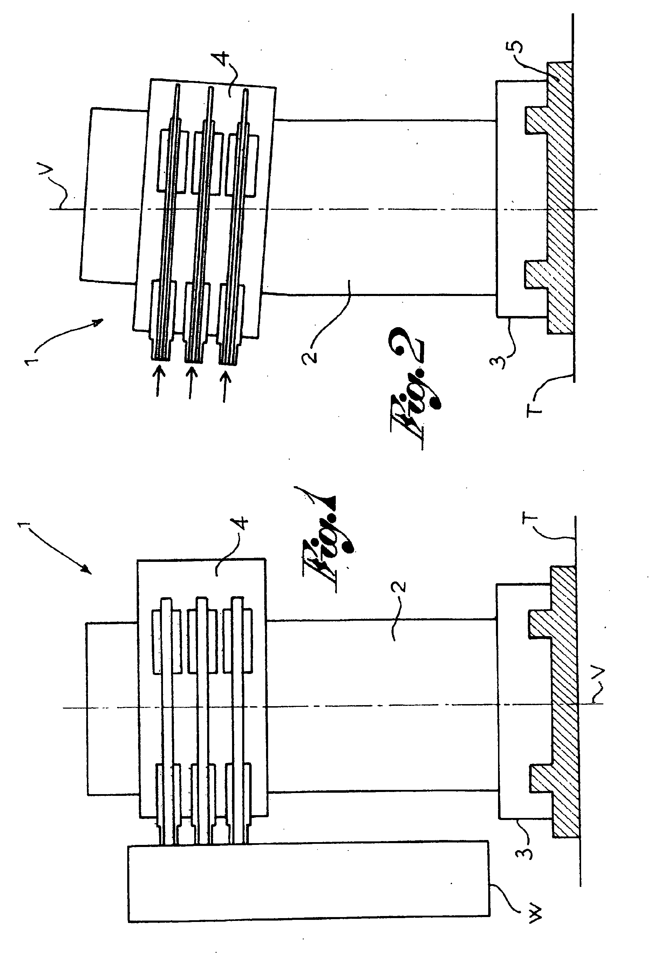

Figures 1 and 2, showing what happens today with column machine tools, illustrate a column machine tool 1, in particular a multi-mandrel drilling machine with three drilling heads, and a workpiece to be processed W.

The machine 1 is brought close up to the workpiece W (figure 1) and, as a result of the mechanical effects spoken of, undergoes a flexion of the upright (figure 2), which negatively influences processing tolerances.

According to one embodiment of the invention, a machine tool 1 comprises an upright 2 of the column type, having a main extension along a vertical axis V, substantially perpendicular to the ground plane T which the machine 1 rests on.

The machine 1 further comprises a base 3, which supports the upright 2, generally resting on a counter 5 in turn resting on a reference ground plane T. For example, the upright 2 is supported by the base 3 by means of hydrostatic supports.

The machine 1 further comprises a carriage 4, motorised so as to slide upon command along the upright 2, comprising at least one processing head.

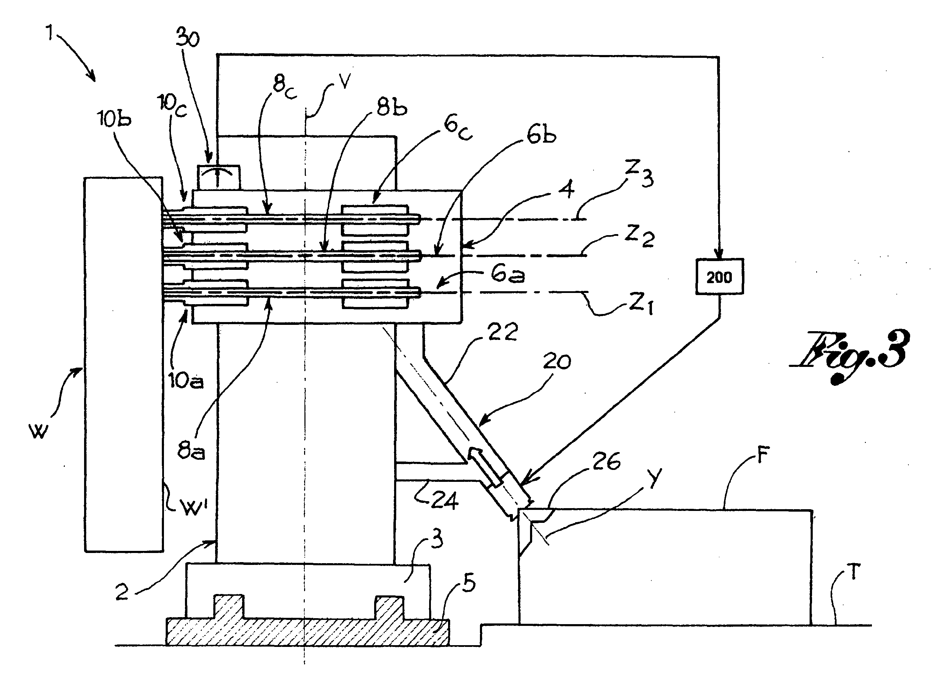

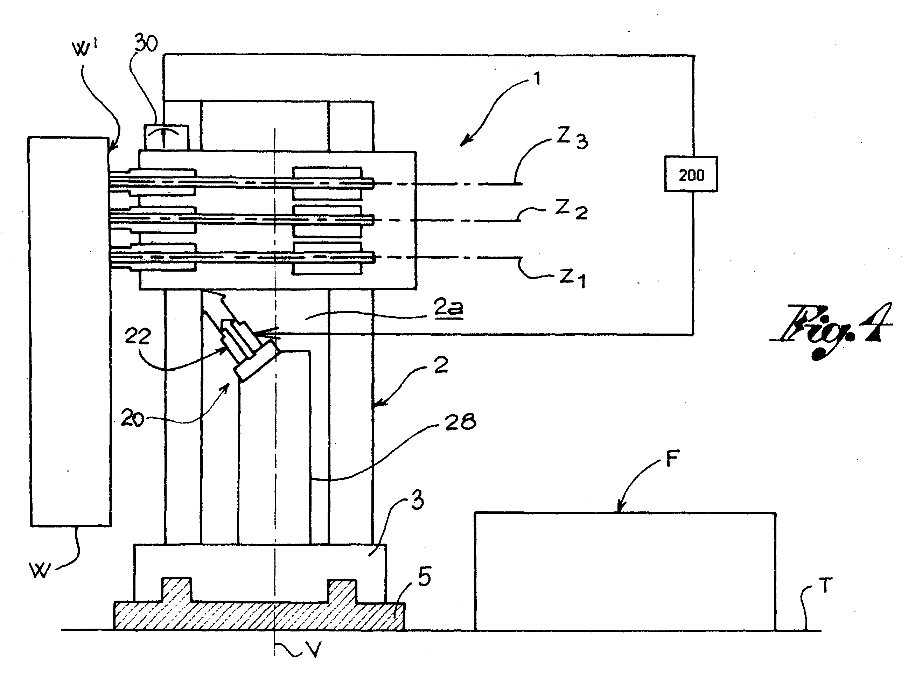

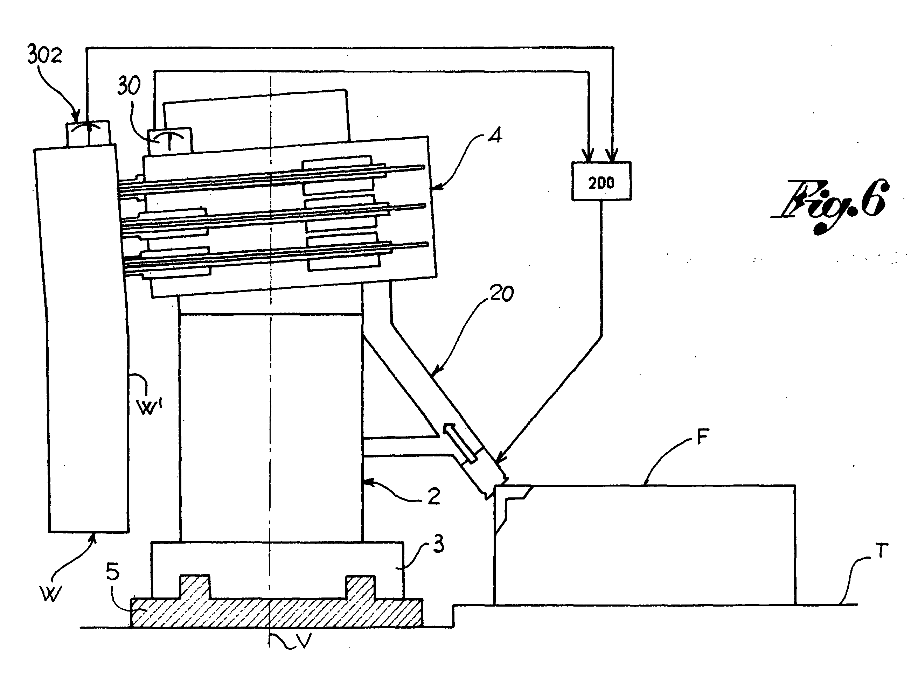

For example, the machine 1 comprises at least one drilling head; in the first example shown (figures 3 to 7), the machine comprises three vertically overlapping drilling heads 6a, 6b, 6c.

Each processing head comprises a mandrel translatable along a processing axis Z, perpendicular to the vertical axis when the machine is in a rest condition, and a respective tool holder, joined in rotation to the mandrel, which holds the tool for processing.

In the first example illustrated, the machine 1 comprises three tool-holders 8a, 8b , 8c respectively for the three drilling heads 6a, 6b, 6c, translating along respective drilling axes Z1, Z2, Z3 each bearing a drill tip.

The machine 1 further comprises, preferably, a support group, to support the tool or tool-holder, next to the frontal portion of the carriage 4, which faces the workpiece W. The support group is supported by the carriage 4.

In the first example illustrated, the machine 1 comprises three support groups 10a, 10b, 10c respectively for the three tool holders 8a, 8b, 8c.

Preferably, the support groups are translatable in relation to the carriage 4 along the processing axis.

For example, the support groups 10a, 10b,10c are respectively translatable along the drilling axes Z1, Z2, Z3.

In the course of drilling, the support group 10a, 10b, 10c is brought close to the workpiece W along the drilling axes Z1, Z2, Z3. and a pre-loading movement is performed, forcing the support group against the processing surface W' of the workpiece W. A seal is thus formed between the support group 10a, 10b, 10c and the surface W' of the workpiece W, needed for the recirculation of the coolant oil.

Once the mandrels have been activated and the tool holders 8a, 8b, 8c made to rotate, advancement along the respective drilling axes Z1, Z2, Z3 proceeds.

Further details of a multi-mandrel drilling machine, the drilling and the coolant oil recirculation systems are illustrated in the Italian patent application for invention BS2009A000171 in the name of the Applicant, the contents of which are hereto incorporated.

The machine 1 comprises at least one contrast element 20 suitable for influencing the upright 2, developing a contrasting action opposed to the mechanical effects acting on the carriage during processing.

According to one embodiment the contrast element 20 is expandable so as to adjust the contrast effect on the upright. For example, the contrast element is mechanically expandable, for example like a worm, or by means of activation devices, such as hydraulic, pneumatic, electric or piezoelectric devices.

According to a preferred embodiment, the contrast element 20 comprises a hydraulic actuator 22 outside the upright 2 (figure 3), at one end resting on the foundation F made for the machine tool, and at the other engaged with the upright 2.

For example, the actuator 22 is active along a contrast axis Y inclined in relation to the vertical axis V.

Preferably, moreover, the contrast element 20 comprises a reinforcement beam 24 which connects the cylinder of the actuator 22 to the upright 2, acting as a tension-rod.

Preferably, moreover, the actuator 22 rests on the foundation F on a reinforced support 26, for example a metal beam, embedded in the foundation.

Preferably, the machine 1 comprises measuring devices able to evaluate the inclination of the carriage 4 in a predefined vertical position along the axis V. For example, said measuring devices comprise a level 30, for example of the digital type, for example joined to the carriage on the frontal portion facing the workpiece W to be processed.

According to a further preferred embodiment, the contrast element 20 is inside the upright 2, in other words is positioned in the compartment 2a inside the upright 2, for example resting on the base 3 which the upright rests on.

In one embodiment variation, the contrast element 20 inside the upright is joined to the upright itself, at the bottom of it.

In the example illustrated, the contrast element 20 comprises a support 28, extending along the vertical axis V, to which the contrast element 20 is joined.

Preferably, the contrast element 20 comprises the actuator 22, resting at one end on said support 28 and at the other end engaged with the upright 2, on the side facing the workpiece W.

According to a further preferred embodiment, the contrast element 20 comprises an arm 40 joined to the upright 2 at a predefined height of this along the vertical axis V, for example at the top of the upright 2. The arm 40 projects from the upright 2 towards the workpiece W.

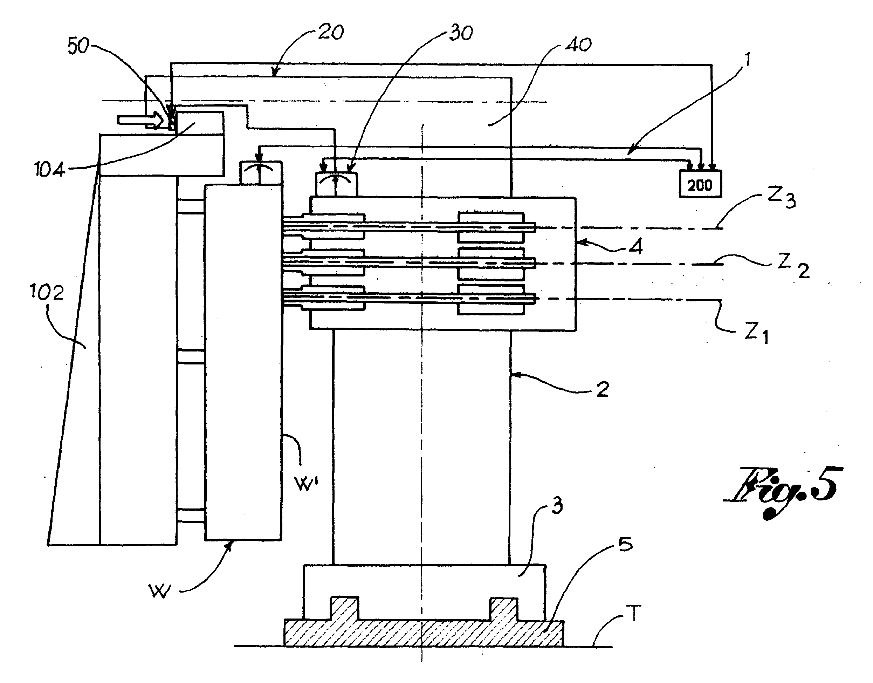

A processing group comprises the machine tool 1 and a support device 102 able to support and hold the workpiece W to be processed in the processing position (figure 5). The support device 102 is positioned on the side opposite the machine tool 1 in relation to the workpiece W.

The support device 102 comprises an engagement portion 104, for example a beam, engaged with the arm 40 of the machine tool 1.

The contrast element 20 further comprises an actuator 50 positioned between the arm 40 and the engagement portion 104 of the support device 102.

During processing performed by means of said processing group, while the mechanical effects between the tool and the workpiece W operate so as to reciprocally distance the upright 2 from the workpiece W, the arm 40 and the actuator 50 operate in contrast, so as to bring the upright and the workpiece closer together, thereby opposing the mechanical effects.

According to further embodiments, the contrast element 20 is expandable so as to adjust the contrast effect on the upright 2.

Preferably, the machine 1 comprises control devices 200, able to acquire a signal from the measuring devices, for example from the level 30, and to command the contrast element 20 so as to solicit the upright with a contrasting effect such as to bring the carriage level.

According to a form of utilisation of the machine 1 fitted with measuring devices, a person skilled in the art may check the level 30 and adjust the contrast element 20 until the machine is level or may consult numerical tables which, on the basis of experience and of numerical calculation techniques, establish the effect of the contrast element on the upright depending on working conditions.

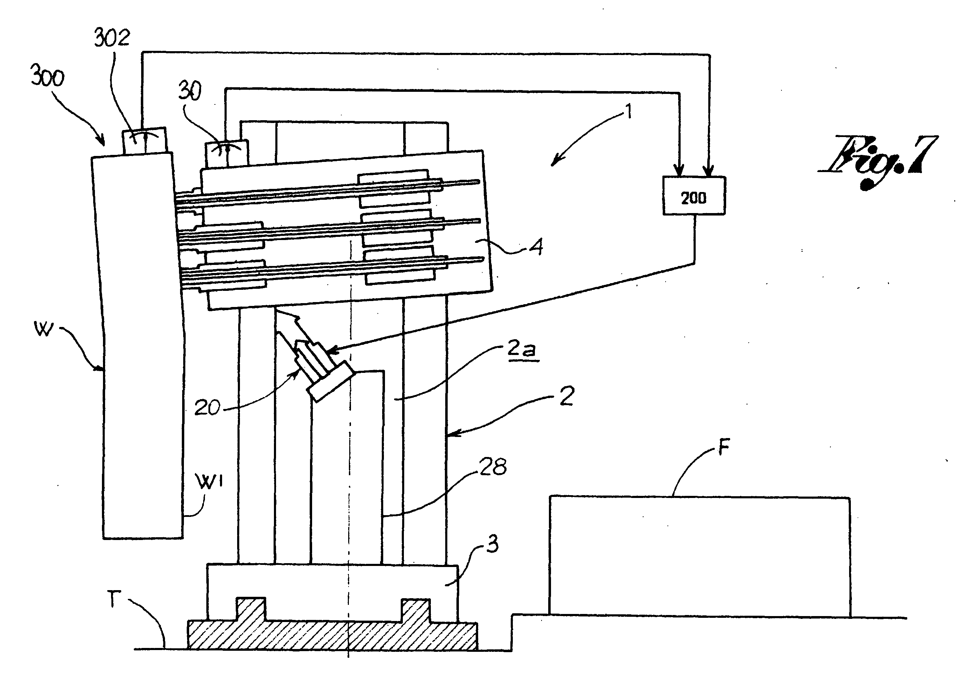

According to yet a further embodiment a processing system 300 comprises the machine tool 1, the workpiece W to be processed and auxiliary measuring devices cooperating with the workpiece W (figure 7).

For example, the auxiliary measuring devices comprise an auxiliary level 302 engaged with the workpiece W, for example resting on the upper surface of it, which forms a reference surface.

The auxiliary level 302 is operatively connected to the control devices 200, which make a comparison of the values detected by the level 30 of the carriage 4 and the level 302 of the workpiece W, adjusting the contrast element 20 accordingly so that the workpiece and the carriage are relatively aligned, so that the difference of inclination measured by the two levels i s substantially nil, that is to say that the working axis is substantially perpendicular to the processing surface W' of the workpiece W.

In other words, the processing system 300 acts so that the contrast effect of the contrast element 20 may even be greater than the mechanical effects acting on the carriage during processing, so as to even allow for the flexion of the workpiece itself caused by the same mechanical effects.

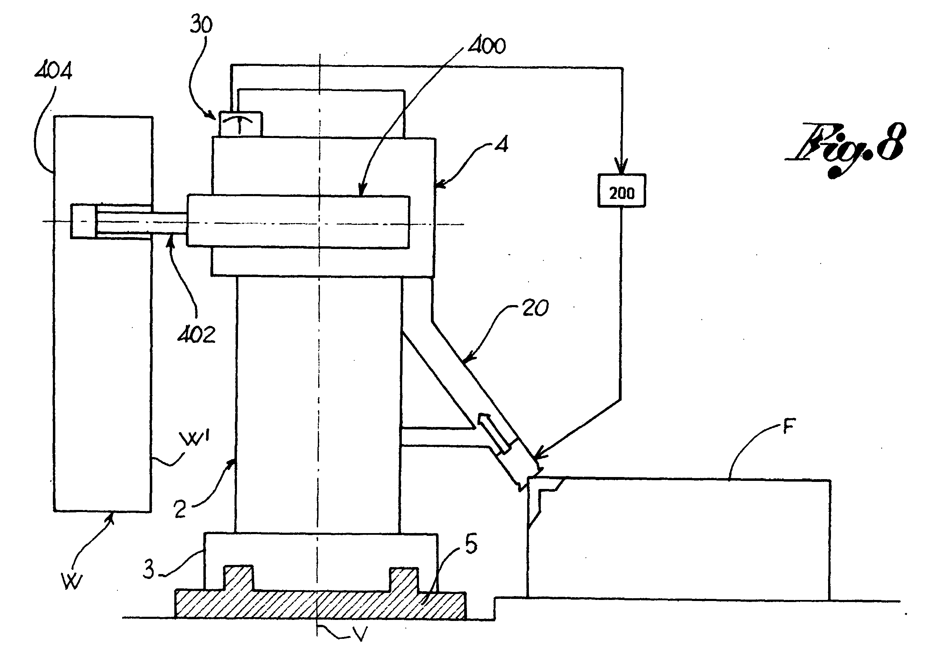

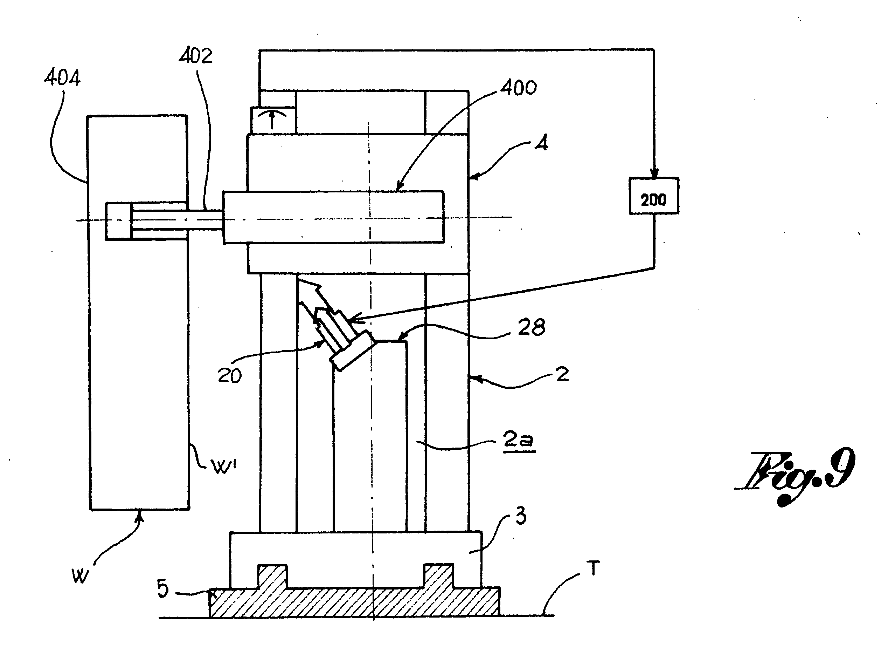

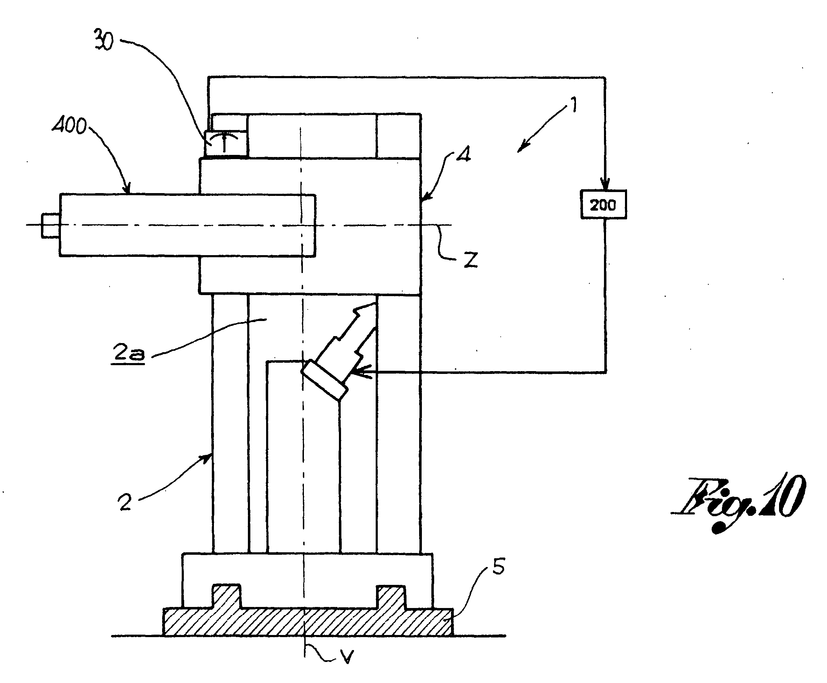

According to a further embodiment of the invention, the machine tool 1 is a boring-milling machine with a vertical upright (figures 8 to 10), comprising the carriage 4 and a boring-milling head 400 having a mandrel 402 holding the tool 404.

Innovatively, the machine tool according to the invention makes it possible to considerably limit processing tolerances even for very tall pieces with considerable forces at play.

For example, for an upright about 5 metres tall, subject to a mechanical effect of 4.5 tons, the flexion of the upright can be limited to less than 6 hundredths of a millimetre.

Advantageously, moreover, the machine enables manual adjustment by a technician, for example, reading the level and adjusting the contrast element, or automatic adjustment.

It is clear that a person skilled in the art may make modifications to the machine tool described above so as to satisfy contingent requirements while remaining within the sphere of protection of the following claims.

## Claims

1. Machine tool (1) for processing a workpiece (W) comprising:
- an upright (2) extending mainly along a vertical axis (V);
- a driven carriage (4) supported by the upright (2) and sliding upon command along the vertical axis (V);
- at least one processing head (6a,6b,6c;400) supported by the carriage, comprising a mandrel supporting a work tool so as to translate along a work axis (Z1, Z2, Z3; Z) towards the workpiece (W);
- at least one contrast element (20) suitable for influencing the upright (2), developing a contrasting action opposed to the mechanical effects acting on the carriage (4) during processing;
**characterized by** the fact that the contrast element (20) is expandable so as to adjust the contrast effect on the upright.

2. Machine according to claim 1, wherein the contrast element is mechanically expandable, for example like a worm.

3. Machine according to claim 1, wherein the contrast element (20) is expandable by means of activation devices, such as hydraulic, pneumatic, electric or piezoelectric devices.

4. Machine according to claim 3, wherein the contrast element (20) comprises a hydraulic actuator (22).

5. Machine according to any of the previous claims, wherein the contrast element (20) is outside the upright (2), resting on the ground (T) and engaged with said upright at a predefined height.

6. Machine according to claim 5, wherein the contrast element (20) comprises a reinforcement beam (24) which connects it to the upright (2) and acts as a tension rod.

7. Machine according to any of the claims from 1 to 4, wherein the contrast element is inside the upright (2).

8. Machine according to any of the previous claims, comprising measuring devices suitable for evaluating the inclination of the carriage (4).

9. Machine according to claim 8, wherein said measuring devices comprise a level (30).

10. Machine according to any of the previous claims, comprising control devices (200) able to control the contrast element (20), to adjust its effect on the upright (4).

11. Machine according to claim 8 or 9 and according to claim 10, wherein the measuring devices are operatively connected to the control devices.

12. Machine according to any of the previous claims, comprising a recirculation system for the coolant oil and at least one support unit, supported by the carriage (4), suitable to translate along the work axis to abut against the surface (W') of the workpiece W and close the oil circuit of said recirculation system of the coolant oil.

13. Processing system (300) comprising:
- a workpiece (W) to be processed and auxiliary measuring devices to measure the inclination of a reference surface of the workpiece in relation to the ground (T);
- a machine tool (1) according to any one of the proceding claims comprising also
d) at least one contrast element (20) suitable for influencing the upright (2), developing a contrasting action opposed to the mechanical effects acting on the carriage (4) during processing;
e) measuring devices suitable for measuring the inclination of the carriage (4) in relation to the ground (T);
- control devices (200) operatively connected to the measuring devices and to the auxiliary measuring devices to acquire the respective signals from these and influence the contrast element to annul the relative rotation between the reference surface of the workpiece (W) and the carriage (4).

14. Processing unit comprising:
- a support device (102) to support the workpiece (W), comprising an engagement portion (104);
- a machine tool (1), according to any one of the preceding claims from 1 to 12, comprising at least one contrast element (20) suitable for influencing the upright (2), developing a contrasting action opposed to the mechanical effects acting on the carriage (4) during processing;
wherein the contrast element (20) comprises an arm (40) projecting from the upright (2) and engaged with the engagement portion (104) of the support device (102) and an actuator (50) between the arm (40) and the engagement portion (104) mounted so as to oppose, by means of said contrasting action, the mechanical forces operating on the carriage (4) during processing.

15. Processing system (300) comprising:
- a processing unit according to claim 14, wherein the machine tool (1) comprises measuring devices able to measure the inclination of the carriage (4) in relation to the ground (T);
- a workpiece (W) to be processed, supported by the support device (102), and auxiliary measuring devices to measure the inclination of a reference surface of the workpiece in relation the ground (T);
- control devices (200) operatively connected to the measuring devices and to auxiliary measuring devices to acquire the respective signals from these and influence the contrast element to annul the relative rotation between the reference surface of the workpiece (W) and the carriage (4).

## Patentansprüche

1. Werkzeugmaschine (1) zum Bearbeiten eines Werkstucks (W), beinhaltend:
- einen Stander (2), der sich im Wesentlichen entlang einer vertikalen Achse (V) erstreckt;
- einen angetriebenen Schlitten (4), der vom Stander (2) getragen wird und auf Kommando entlang der vertikalen Achse (V) gleitet;
- zumindest einen vom Schlitten getragenen Bearbeitungskopf (6a, 6b, 6c; 400), der eine ein Arbeitswerkzeug tragende Spindel beinhaltet, um sich entlang einer Arbeitsachse (Z1, Z2, Z3; Z) in Richtung des Werkstucks (W) zu bewegen;
- zumindest ein, zum Beeinflussen des Standers (2) geeignetes Kontrastelement (20), das eine kontrastierende Wirkung entwickelt, die den auf den Schlitten (4) wahrend des Bearbeitens ausgeubten mechanischen Effekten entgegengesetzt ist;
**gekennzeichnet durch** die Tatsache, dass das Kontrastelement (20) expandierbar ist, um den Kontrasteffekt auf den Stander einzustellen.

2. Maschine nach Anspruch 1, wobei das Kontrastelement mechanisch expandierbar ist, zum Beispiel wie ein Wurm.

3. Maschine nach Anspruch 1, wobei das Kontrastelement (20) expandierbar ist mittels Aktivierungsgeraten, wie hydraulischen, pneumatischen, elektrischen oder piezoelektrischen Geraten.

4. Maschine nach Anspruch 3, wobei das Kontrastelement (20) einen hydraulischen Aktor (22) beinhaltet.

5. Maschine nach einem der vorhergehenden Anspruche, wobei das Kontrastelement (20) außerhalb des Standers (2) ist, abgestutzt auf dem Untergrund (T) und im Eingriff mit dem Stander auf einer vordefinierten Hohe.

6. Maschine nach Anspruch 5, wobei das Kontrastelement (20) einen Verstarkungsbalken (24) beinhaltet, der es mit dem Stander (2) verbindet und als ein Spannungsstab wirkt.

7. Maschine nach einem der Anspruche 1 bis 4, wobei das Kontrastelement innerhalb des Standers (2) ist.

8. Maschine nach einem der vorhergehenden Anspruche, beinhaltend Messgerate, die zum Ermitteln der Neigung des Schlittens (4) geeignet sind.

9. Maschine nach Anspruch 8, wobei die Messgerate ein Nivelliergerät (30) beinhalten.

10. Maschine nach einem der vorhergehenden Anspruche, beinhaltend Steuerungsgerate (200), die in der Lage sind, das Kontrastelement (20) zu steuern, um dessen Effekt auf den Stander (2) einzustellen.

11. Maschine nach Anspruch 8 oder 9 und nach Anspruch 10, wobei die Messgerate mit den Steuerungsgeraten wirkverbunden sind.

12. Maschine nach einem der vorhergehenden Anspruche, beinhaltend ein Umwalzungssystem fur das Kuhlmittelöl und zumindest eine Abstutzeinrichtung, gestutzt vom Schlitten (4), die zum Bewegen entlang der Arbeitsachse geeignet ist, um sich an der Oberflache (W') des Werkstucks W abzustutzen und den Ölkreislauf des Umwalzungssystems des Kühlmittelöls zu schließen.

13. Bearbeitungssystem (300) beinhaltend:
- ein zu bearbeitendes Werkstuck (W) und Hilfs-Messgerate zum Messen der Neigung einer Referenzoberflache des Werkstucks relativ zum Untergrund (T);
- eine Werkzeugmaschine (1) nach einem der vorhergehenden Anspruche zusätzlich beinhaltend
d) zumindest ein zum Beeinflussen des Standers (2) geeignetes Kontrastelement (20), das eine kontrastierende Wirkung entgegen den auf den Schlitten (4) wahrend des Bearbeitens einwirkenden mechanischen Effekten entwickelt;
e) Messgerate, die zum Messen der Neigung des Schlittens (4) in Relation zum Untergrund (T) geeignet sind;
- Steuerungsgerate (200), die mit den Messgeraten und den Hilfs-Messgeraten wirkverbunden sind, um die entsprechenden Signale derselben aufzunehmen und das Kontrastelement zu beeinflussen, um die relative Drehung zwischen der Referenzoberflache des Werkstucks (W) und dem Schlitten (4) auszugleichen.

14. Bearbeitungseinheit beinhaltend:
- eine Abstutzeinrichtung (102) zum Stutzen des Werkstucks (W), beinhaltend einen Halteabschnitt (104);
- eine Werkzeugmaschine (1), nach einem der vorhergehenden Anspruche 1 bis 12, beinhaltend zumindest ein zum Beeinflussen des Standers (2) geeignetes Kontrastelement (20), das eine kontrastierende Wirkung entwickelt, die den auf den Schlitten (4) wahrend des Bearbeitens ausgeubten mechanischen Effekten entgegengesetzt ist;
wobei das Kontrastelement (20) einen Arm (40), der vom Stander (2) erstreckt und mit dem Halteabschnitt (104) der Abstutzeinrichtung (102) verbunden ist, und einen Aktor (50) zwischen dem Arm (40) und dem Halteabschnitt (104) beinhaltet, der angeordnet ist, um den auf den Schlitten (4) wahrend der Bearbeitung einwirkenden mechanischen Kraften mittels der kontrastierenden Wirkung entgegenzuwirken.

15. Bearbeitungssystem (300) beinhaltend:
- eine Bearbeitungseinheit nach Anspruch 14, wobei die Werkzeugmaschine (1) Messgerate beinhaltet, die in der Lage sind, die Neigung des Schlittens (4) in Relation zum Untergrund (T) zu messen;
- ein zu bearbeitendes Werkstuck (W), das durch den Halteabschnitt (102) gehalten wird, und Hilfs-Messgerate zum Messen der Neigung einer Referenzoberflache des Werkstucks in Relation zum Untergrund (T);
- Steuerungsgerate (200), die mit den Messgeraten und den Hilfs-Messgeraten wirkverbunden sind, um die entsprechenden Signale derselben aufzunehmen und das Kontrastelement zu beeinflussen, um die relative Drehung zwischen der Referenzoberflache des Werkstucks (W) und dem Schlitten (4) zu kompensieren.

## Revendications

1. Machine-outil (1) destinée à traiter une pièce (W) comprenant :
- une colonne (2) s'étendant principalement le long d'un axe vertical (V) ;
- un chariot entraîné (4) soutenu par la colonne (2) et glissant sur commande le long de l'axe vertical (V) ;
- au moins une tête de traitement (6a,6b,6c ; 400) soutenue par le chariot, comprenant un mandrin soutenant un outil de travail de manière à se déplacer le long d'un axe de travail (Z1, Z2, Z3 ; Z) vers la pièce (W) ;
- au moins un élément de contraste (20) approprié pour influer sur la colonne (2), développant une action de contraste opposée aux effets mécaniques agissant sur le chariot (4) pendant le traitement ;
**caractérisée par le fait que** l'élément de contraste (20) est extensible de manière à ajuster l'effet de contraste sur la colonne.

2. Machine selon la revendication 1, dans laquelle l'élément de contraste est mécaniquement extensible, par exemple comme une vis sans fin.

3. Machine selon la revendication 1, dans laquelle l'élément de contraste (20) est extensible au moyen de dispositifs d'activation, tels que des dispositifs hydrauliques, pneumatiques, électriques ou piézoélectriques.

4. Machine selon la revendication 3, dans laquelle l'élément de contraste (20) comprend un actionneur hydraulique (22).

5. Machine selon l'une quelconque des revendications précédentes, dans laquelle l'élément de contraste (20) se trouve à l'extérieur de la colonne (2), reposant sur le sol (T) et en prise avec ladite colonne à une hauteur prédéfinie.

6. Machine selon la revendication 5, dans laquelle l'élément de contraste (20) comprend une traverse de renforcement (24) qui le relie à la colonne (2) et sert de tige de tension.

7. Machine selon l'une quelconque des revendications 1 à 4, dans laquelle l'élément de contraste se trouve à l'intérieur de la colonne (2).

8. Machine selon l'une quelconque des revendications précédentes, comprenant des dispositifs de mesure appropriés pour évaluer l'inclinaison du chariot (4).

9. Machine selon la revendication 8, dans laquelle lesdits dispositifs de mesure comprennent un niveau (30).

10. Machine selon l'une quelconque des revendications précédentes, comprenant des dispositifs de commande (200) pouvant commander l'élément de contraste (20), afin d'ajuster son effet sur la colonne (4).

11. Machine selon la revendication 8 ou 9 et selon la revendication 10, dans laquelle les dispositifs de mesure sont fonctionnellement reliés aux dispositifs de commande.

12. Machine selon l'une quelconque des revendications précédentes, comprenant un système de recirculation pour huile de refroidissement et au moins une unité de soutien, soutenue par la chariot (4), appropriée pour se déplacer le long de l'axe de travail pour venir buter contre la surface (W') de la pièce (W) et pour fermer le circuit d'huile dudit système de recirculation de l'huile de refroidissement.

13. Système de traitement (300) comprenant :
- une pièce (W) à traiter et des dispositifs de mesure auxiliaires pour mesurer l'inclinaison d'une surface de référence de la pièce par rapport au sol (T) ;
- une machine-outil (1) selon l'une quelconque des revendications précédentes comprenant également
d) au moins un élément de contraste (20) approprié pour influer sur la colonne (2), développant une action de contraste opposée aux effets mécaniques agissant sur le chariot (4) pendant le traitement ;
e) des dispositifs de mesure appropriés pour mesurer l'inclinaison du chariot (4) par rapport au sol (T) ;
- des dispositifs de commande (200) fonctionnellement reliés aux dispositifs de mesure et aux dispositifs de mesure auxiliaires pour acquérir les signaux respectifs provenant de ces derniers et pour influer sur l'élément de contraste afin d'annuler la rotation relative entre la surface de référence de la pièce (W) et le chariot (4).

14. Unité de traitement comprenant :
- un dispositif de soutien (102) pour soutenir la pièce (W), comprenant une partie de mise en prise (104) ;
- une machine-outil (1), selon l'une quelconque des revendications précédentes 1 à 12, comprenant au moins un élément de contraste (20) approprié pour influer sur la colonne (2), développant une action de contraste opposée aux effets mécaniques agissant sur le chariot (4) pendant le traitement ;
dans laquelle l'élément de contraste (20) comprend un bras (40) dépassant de la colonne (2) et venant en prise avec la partie de mise en prise (104) du dispositif de soutien (102) et un actionneur (50) entre le bras (40) et la partie de mise en prise (104) monté de manière à s'opposer, par le biais de ladite action de contraste, aux forces mécaniques agissant sur le chariot (4) pendant le traitement.

15. Système de traitement (300) comprenant :
- une unité de traitement selon la revendication 14, dans laquelle la machine-outil (1) comprend des dispositifs de mesure pouvant mesurer l'inclinaison du chariot (4) par rapport au sol (T) ;
- une pièce (W) à traiter, soutenue par le dispositif de soutien (102), et des dispositifs de mesure auxiliaires pour mesurer l'inclinaison d'une surface de référence de la pièce par rapport au sol (T) ;
- des dispositifs de commande (200) fonctionnellement reliés aux dispositifs de mesure et aux dispositifs de mesure auxiliaires pour obtenir les signaux respectifs provenant de ces derniers et pour influer sur l'élément de contraste afin d'annuler la rotation relative entre la surface de référence de la pièce (W) et le chariot (4).
